# EUROPEAN PATENT SPECIFICATION

(11) **EP 4 329 358 B1**
(45) Date of publication and mention of the grant of the patent: **02.09.2026**
(21) Application number: 21944862.8
(22) Date of filing: 24.11.2021
(51) Int. Cl.: H04L 41/5025, H04L 41/5019, H04W 24/02, H04L 41/40, H04L 41/0894, H04L 41/5009, H04L 41/16

(54) **NETWORK SLICE SELF-OPTIMIZATION METHOD, BASE STATION, AND STORAGE MEDIUM**
VERFAHREN ZUR SELBSTOPTIMIERUNG VON NETZWERK-SLICES, BASISSTATION UND SPEICHERMEDIUM
PROCÉDÉ D'AUTO-OPTIMISATION DE TRANCHE DE RÉSEAU, STATION DE BASE, ET SUPPORT DE STOCKAGE

(30) Priority: 08.06.2021 CN 202110635730
(43) Date of publication of application: 28.02.2024
(73) Proprietor: ZTE Corporation, Shenzhen, Guangdong 518057 (CN)
(72) Inventor: GUO, Hua, Shenzhen, Guangdong 518057 (CN)
(74) Representative: Savi, Massimiliano
(86) International application number: PCT/CN2021/132853
(87) International publication number: WO 2022/257366

(56) References cited:
- CN-A- 112 668 877
- CN-A- 112 887 120
- US-A1- 2021 160 153
- US-A1- 2021 168 031
- US-B1- 10 992 396
- YINGYU LI ET AL: "Federated Orchestration for Network Slicing of Bandwidth and Computational Resource", ARXIV.ORG, CORNELL UNIVERSITY LIBRARY, 201 OLIN LIBRARY CORNELL UNIVERSITY ITHACA, NY 14853, 6 February 2020 (2020-02-06), XP081594628
- HUAWEI: "Add use case and potential solutions of cross-slice resource optimization analysis", 3GPP DRAFT; S5-203202, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. e-meeting; 20200525 - 20200603, 15 May 2020 (2020-05-15), Mobile Competence Centre ; 650, route des Lucioles ; F-06921 Sophia-Antipolis Cedex ; France , XP051886566
- LI QIYAO: "The Research on Intelligent Reconfiguration Mechanism of Network Slice", CHINESE MASTER'S THESES FULL-TEXT DATABASE, INFORMATION SCIENCE & TECHNOLOGY, no. 7, 15 July 2020 (2020-07-15), XP093012313

## Description

### TECHNICAL FIELD

The present disclosure relates to the technical field of communication, and in particular to a method for network slice self-optimization, a base station, and a storage medium.

### BACKGROUND

Currently, the 5th generation (5G) wireless communication technology has become a hot topic in the industry. Due to the ability of network slicing technology in 5G networks to select the characteristics required for each slice, such as low latency, high throughput, connection density, spectrum efficiency, traffic capacity, and network efficiency, the technology is helpful in improving the efficiency of creating products and services, and enhances customer experience. Slicing technology in 5G networks is mainly applied in various vertical industries with high demand for network communication, such as the Internet of Vehicles, emergency communication, and industrial Internet. In order to ensure the normal operation of network slices, it is necessary to optimize each network slice in real-time. However, in vertical industries, due to limited scale and the lack of optimization capabilities for network operation and maintenance in the industries, a large amount of manual work is required, resulting in high operation and maintenance costs.

Patent literature US 2021/168031 A1 generally directed to facilitating the allocation, scheduling, and management of network slice resources.

Internet publication "Federated Orchestration for Network Slicing of Bandwidth and Computational Resource" by YINGYU LI ET AL, proposes a distributed resource allocation algorithm based on Alternating Direction Method of Multipliers with Partial Variable Splitting (DistADMM-PVS).

Patent literature US 2021/160153 A1 describes techniques for slice assurance within a mobile network.

Patent literature CN112887120 A discloses an information processing method and device, which are applied to the field of network slicing.

### SUMMARY

The following is a summary of the subject matter described herein. This summary is not intended to limit the scope of protection of the claims.

The invention is set out in the appended claims.

Provided are a method for network slice self-optimization, a base station, and a storage medium in some embodiments of the present disclosure.

An embodiment of the present disclosure provides a method for network slice self-optimization, applied to a first base station connected with a server in turn connected with a second base station, the method includes, receiving optimization policy information and indicator threshold sent by a server, where the optimization policy information includes first network slice resource configuration information and a parameter optimization model, and the first network slice resource configuration information and the parameter optimization model are both received from the second base station through the server; acquiring a service-level agreement (SLA) indicator according to the first network slice resource configuration information and the parameter optimization model; and adjusting the first network slice resource configuration information, in response to dissatisfaction of the SLA indicator with the indicator threshold, such that the SLA indicator satisfies the indicator threshold.

An embodiment of the present disclosure provides a method for network slice self-optimization, applied to a second base station connected with a server in turn connected with a first base station, the method includes, acquiring a task threshold sent by the server; acquiring local network slice resource configuration information and a parameter optimization model; acquiring first network slice resource configuration information according to the task threshold, the local network slice resource configuration information and the parameter optimization model; sending the first network slice resource configuration information and the parameter optimization model to the first base station through the server, to cause the first base station to acquire a service-level agreement (SLA) indicator according to the first network slice resource configuration information and the parameter optimization model, and to cause the first base station to adjust the first network slice resource configuration information, in response to a dissatisfaction of the SLA indicator with the indicator threshold sent by the server to the first base station, such that the SLA indicator satisfies the indicator threshold.

An embodiment of the present disclosure provides a base station, which includes a memory, a processor, and a computer program stored in the memory and executable by the processor which, when executed by the processor causes the processor to carry out the method described in any one embodiment of the present disclosure.

An embodiment of the present disclosure provides a computer-readable storage medium storing a computer program which, when executed by a processor, causes the processor to carry out the method described in any one embodiment of the present disclosure. Other features and advantages of the present disclosure will be illustrated in the following description, and in part will be apparent from the description, or may be understood by practicing the present disclosure. The objects and other advantages of the present disclosure can be achieved and obtained by the structure particularly outlined in the description, claims, and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic system for network slice optimization where the method for network slice self-optimization is carried out according to an embodiment of the present disclosure;
FIG. 2 depicts a schematic flowchart showing a method for network slice self-optimization according to an embodiment of the present disclosure;
FIG. 3 depicts a schematic flowchart showing an implementation of operation S200 shown in FIG. 2;
FIG. 4 depicts a schematic flowchart showing an implementation of operation S300 shown in FIG. 2;
FIG. 5 depicts a schematic flowchart diagram showing the additional operations after operation S200 shown in FIG. 2;
FIG. 6 depicts a schematic flow diagram showing the process of the formation of optimization policy information according to an embodiment of the present disclosure;
FIG. 7 depicts a schematic flowchart showing a method for network slice self-optimization according to an embodiment of the present disclosure;
FIG. 8 depicts a schematic flowchart showing an implementation of operation S900 shown in FIG. 7; and
FIG. 9 depicts a schematic diagram showing a base station according to an embodiment of the present disclosure.

### DETAILED DESCRIPTION

The purpose, technical scheme, and advantages of the present disclosure will become apparent through the following description for various embodiments in conjunction with the drawings. It should be understood that the embodiments described here are intended for illustration rather than limitation to the present disclosure.

It should be noted that although the modules are shown with individual functional modules in the schematic diagram and the logical sequences are shown in the flow chart, in some cases, the module can have different divisions than those shown and the steps can be executed in a different order than those shown. It should be noted that the terms "first" and "second", if used in the description, the claims and the drawings are intended to distinguish similar objects, and do not necessarily imply any specific order or sequence.

An embodiment of the present disclosure provides a method for network slice self-optimization, in which, an indicator threshold and optimization policy information from a second base station are acquired through a server, where the optimization policy information includes first network slice resource configuration information and a parameter optimization model. As such, a service-level agreement (SLA) indicator can be obtained by means of the first network slice resource configuration information and the parameter optimization model from the second base station. The SLA indicator may represent the performance of the current network slice, or may represent the optimization effect of the current network slice. Hence, the optimization policy information of other base stations can be obtained through the server as data samples to optimize the local base station, thereby expanding the data samples, and improving optimization efficiency and effectiveness. As a task criterion issued by the server, the indicator threshold is intended to determine the optimization effect of the current base station. When the SLA indicator does not meet the indicator threshold, it can be considered that the optimization effect of the network slice of the current base station has not reached the criterion and needs to be further optimized. The SLA indicator can meet the indicator threshold by suitably adjusting the first network slice resource configuration information, such that, the optimization effect of the network slice of the current base station meets the requirements and the optimization task is completed. Therefore, through the indicator threshold issued by the server and the SLA indicator representing the performance of the current network slice, the configuration parameters of the first base station are adjusted for optimization, so as to realize the self-optimization of the RAN network slice, thus reducing the workload of manual optimization and improving the efficiency of network optimization.

In order to facilitate understanding, an application scenario of the method for network slice self-optimization according to an embodiment of the present disclosure is introduced below in conjunction with the drawings.

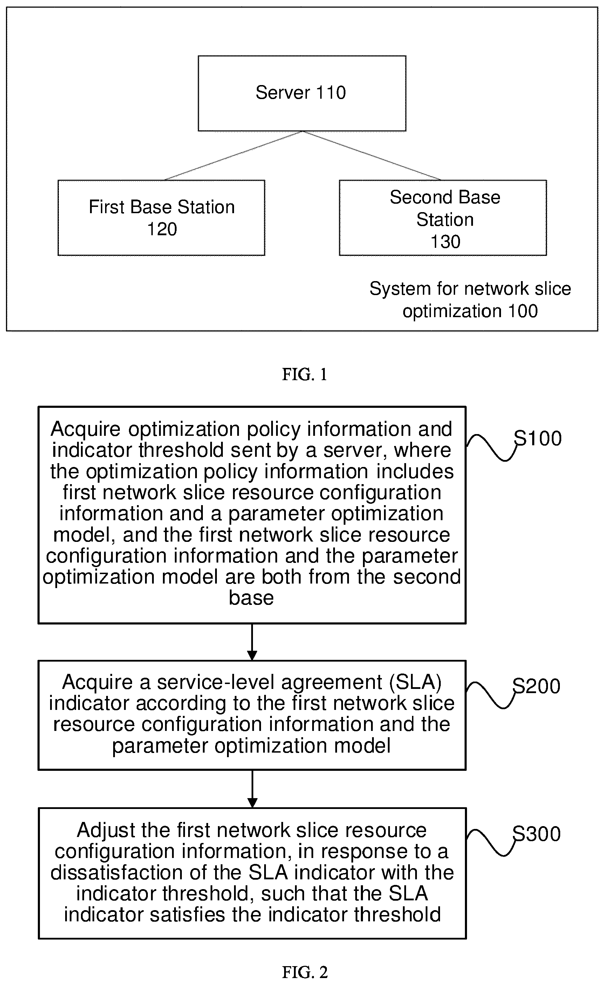

FIG. 1 depicts a system for network slice optimization 100 where the method for network slice self-optimization is carried out. The system 100 includes a server 110 that connects with a first base station 120 and a second base station 130, respectively. The server 110 may be a wireless sub-slice manager, which includes a wireless sub-slice management function, e.g., a radio access network (RAN) Network Slice Subnet Management Function (RAN-NSSMF) that is responsible for completing the application for resource and managing the life cycle of the wireless sub-slice. The first base station 120 and the second base station 130 connected to the server 110 can be base stations within the coverage of wireless sub-slices. The first base station 120 is a base station that is intended to perform self-optimization by means of data from another base station, while the second base station 130 can perform optimization independently of the data of another base station. As such, under the coordination of the server 110, the first base station 120 can utilize the optimized data sent by the second base station 130 to the server 110 as the input for machine learning, thus achieving the so-called lateral federated learning of the base stations, and the self-optimization of the base stations.

It should be noted that the server 110 is further configured to respond to instantiation information, determine according to the instantiation information, the base station for subsequent optimization to perform lateral federated learning and optimization, and determine the instantiated configuration data, and send the instantiated configuration data to the base station for subsequent optimization. The server 110 is further configured to receive the feedback of the instantiated configuration data from the base station for optimization, and determine the base station for optimization whose instantiation is completed, according to the feedback, so as to facilitate the subsequent network slice self-optimization processing for the base station for optimization.

It should be noted that the server 110 can further be connected with a Network Slice Management Function (NSMF), i.e., a third-party slice management system. The instantiation information can be initiated by the NSMF or manually input, and the instantiation information is intended for the server to issue an instantiation operation to instantiate the network slice of the base station, so as to facilitate the subsequent optimization task for the network slice.

It should be noted that the server 110 can also receive the externally input slice optimization task parameters and send them to a designated base station. For example, the slice optimization task parameters can be data associated with network slice configuration, including optimization algorithm, SLA task indicator, and optimization threshold. The server 110 can also select through the participant selection algorithm, a base station within the coverage of the server 110 as the first base station 120 or the second base station 130 to which the optimization task is sent. In other words, the server 110 can select the preferred base station from the base stations within the coverage as the second base station 130 according to the parameters such as the quality and quantity of data samples. The data samples of the preferred base station can meet the task requirements of local network slice optimization, and the data sample can be independent of the data samples of other base stations, and can enable other base stations to expand data samples and perform network slice optimization tasks to the greatest extent. That is, data samples are supplied to the first base station 120, such that the optimization effect and efficiency of the first base station 120 are improved.

The system 100 described in an embodiment of the present disclosure is intended for a better understanding of rather than limitations to the technical scheme of various embodiments of the present disclosure. It is known to those having ordinary skills in the art that, with the evolution of the system 100 and the emergence of new application scenarios, the technical scheme provided by the embodiment of the present disclosure is also applicable to similar technical problems.

It can be understood by those having ordinary skills in the art that the system 100 shown in FIG. 1 does not constitute a limitation to the embodiment of the present disclosure and may include more or fewer components than those shown, or some components may be combined, or have different component arrangements.

Various embodiments of the method for network slice self-optimization are proposed based on the structure of the network slice optimization system 100.

Referring to FIG. 2, which depicts a flowchart showing a method for network slice self-optimization according to an embodiment of the present disclosure. The method can be applied to a first base station, such as the first base station shown in FIG. 1. The method includes without limitations, the following operations.

At S100, optimization policy information and indicator threshold sent by a server are acquired, where the optimization policy information includes first network slice resource configuration information and a parameter optimization model, and the first network slice resource configuration information and the parameter optimization model are both from a second base station.

It can be understood that the first base station obtains the optimization policy information and indicator threshold through the server, in which the indicator threshold is a standard condition for the base station to complete the optimization task, the optimization policy information includes the first network slice resource configuration information and the parameter optimization model. The optimization policy information, namely the first network slice resource configuration information and the parameter optimization model, both come from the second base station. As such, the first base station can utilize the first network slice resource configuration information and the parameter optimization model from the second base station, for subsequent optimization, so as to realize the lateral federated learning between the first base station and the second base station, thus expanding the data samples of the first base station for network slice optimization, and improving the optimization effect and efficiency. The first base station obtains the optimization policy information of the second base station originating from a completed optimization by the second base station, through the server, i.e., the first network slice resource configuration information and parameter optimization model, and performs network slice optimization. Currently, the optimization of network slice is not effective due to the insufficient amount of data and the poor data quality of the network slice in some base stations. It is thus necessary to provide a centralized place from which data from relevant base stations is acquired, for network slice optimization. However, the data may contain user privacy data, while a large amount of data interacts between the centralized place and the base stations, which increases the communication overhead and affects the stability of the network. In contrast, the first base station utilizes the first network slice resource configuration information and parameter model originated from a completed optimization by the second base station, to perform subsequent optimization on the network slice, thus realizing the lateral federated learning of the base stations, eliminating the need for providing a centralized place from which the data of the relevant base station is acquired, and avoiding the interaction of a large amount of data between the centralized place if provided and the base stations. Consequently, the communication overhead between the server and the base station is reduced and the stability of the network is improved.

At S200, a service-level agreement (SLA) indicator is acquired according to the first network slice resource configuration information and the parameter optimization model.

At S300, the first network slice resource configuration information is adjusted, in response to a dissatisfaction of the SLA indicator with the indicator threshold, such that the SLA indicator satisfies the indicator threshold.

It can be understood that the SLA indicator corresponding to the optimized network slice is obtained through the optimization of the network slice by means of the first network slice resource configuration information and the parameter optimization model from the second base station. The SLA indicator can represent the performance of the current network slice, i.e., the availability of the current network slice. Before the first base station performs optimization, the indicator threshold corresponding to the SLA indicator and issued by the server is obtained, and the indicator threshold represents the SLA indicator corresponding to the network slice whose optimization task, i,e, the goal of the optimization task is successfully completed. When the SLA indicator obtained by the network slice after the first base station completes the optimization does not meet the indicator threshold, it can be considered that the current network slice of the first base station has not reached the goal of the optimization task, and the first base station needs further optimization for the network slice. The first network slice resource configuration information is the configuration data or policy data associated with the network slice, and the adjustment and optimization of the network slice can be achieved by adjustment of the first network slice resource configuration information. The adjusted SLA indicator is obtained by means of the adjusted first network slice resource configuration information and parameter optimization model. If the adjusted SLA indicator still fails to meet the indicator threshold, the network slice has to be successively optimized, that is, the first network slice resource configuration information has to be successively adjusted until the adjusted SLA indicator meets the indicator threshold, such that the adjusted network slice can achieve the goal of the optimization. Hence, the SLA indicator can meet the indicator threshold by suitably adjusting the first network slice resource configuration information, such that, the optimization effect of the network slice of the current base station meets the requirements and the optimization task is completed. Therefore, through the indicator threshold issued by the server and the SLA indicator representing the performance of the current network slice, the first network slice resource configuration information from the second base station is adjusted for optimization, so as to realize the self-optimization of the RAN network slice by lateral federated learning, thus reducing the workload of manual optimization and improving the efficiency of network optimization.

It should be noted that when the SLA indicator does not satisfy the indicator threshold, the first base station will keep adjusting the first network slice resource configuration information until the SLA indicator satisfies the indicator threshold. In order to avoid long optimization processing time and improve optimization efficiency, the iteration times of SLA can be limited by setting the upper limit of adjustment times, that is, the adjustment times of the first network slice resource configuration information are limited. When the adjustment times of the first network slice resource configuration information reach the upper limit of adjustment times, the last adjusted first network slice resource configuration information is retained and is taken as the optimization result, then the optimization of the network slice ends.

It should be noted that the first network slice resource configuration information may include at least one of, a resource reservation policy, a service quality configuration policy, or a 5G service quality indicator, and may also be a parameter set related to SLA indicators defined in the 3rd Generation Partnership Project (3GPP) specification, this embodiment is not limited thereto. For example, the first network slice resource configuration information can be the maximum resource reservation ratio parameter in the resource reservation policy, and the network slice is optimized by adjusting the maximum resource reservation ratio parameter, so that the SLA indicator meets the indicator threshold. For another example, the first network slice resource configuration information can be a quality of service (QoS) configuration policy. In this case, the network slice can be optimized by adjusting the network traffic priority in the QoS configuration policy, so that the SLA indicator meets the indicator threshold.

It should be noted that under the condition that the SLA indicator does not meet the indicator threshold, the first base station can further adjust the first network slice resource configuration information according to the gap relationship between the SLA indicator that corresponds to a preceding completed adjustment to the first network slice resource configuration information and the indicator threshold. For example, the first network slice resource configuration information can be a maximum resource reservation ratio parameter. After increasing the maximum resource reservation ratio parameter, the gap between the adjusted SLA and the indicator threshold is increased. In such a case, the maximum resource reservation ratio parameter is successively adjusted in the reverse direction, that is, the parameter is kept decreasing. For another example, after the maximum resource reservation ratio parameter is increased, the gap between the adjusted SLA indicator and the indicator threshold is narrowed. In such a case, the direction of the adjustment of the first network slice resource configuration information is maintained (keep increasing), but the step for the adjustment is shortened, thereby improving the efficiency of the network slice optimization of the first base station.

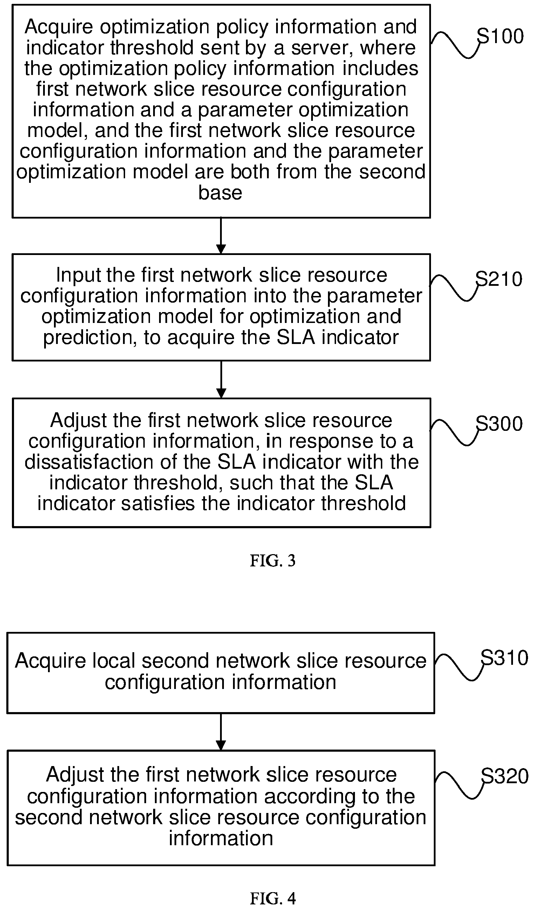

Referring to FIG. 3, S200 in the embodiment shown in conjunction with FIG. 2 further includes, but is not limited to, the following operations.

At S210, the first network slice resource configuration information is input into the parameter optimization model for optimization and prediction to obtain the SLA indicator.

It can be understood that both the first network slice resource configuration information and the parameter optimization model are from the second base station, and are the data originated from a completed optimization by the second base station. The first base station utilizes the first network slice resource configuration information sent by the server as the input parameter of the parameter optimization model to perform optimization and prediction of the network slice and obtain the SLA indicator. In other words, in the first base station, the network slice is processed by means of the data samples originating from the optimization by the second base station, which enlarges the data samples with which the first base station performs the optimization, and improves the optimization effect of the first base station. Hence, the satisfaction of the SLA indicator corresponding to the adjusted network slice with the indicator threshold, the completion of the optimization task and the improvement of the optimization efficiency are made easier.

Referring to FIG. 4, S300 in the embodiment shown in conjunction with FIG. 2 further includes, but is not limited to, the following operations.

At S310, a second network slice resource configuration information, which is local, is acquired.

At S320, the first network slice resource configuration information is adjusted according to the second network slice resource configuration information.

It can be understood that the first base station obtains the first network slice resource configuration information and parameter optimization model from the second base station, through the server, and optimizes the network slice in the first base station by means of the first network slice resource configuration information and parameter optimization model originated from the completed optimization by the second base station. Since the environment and conditions of each base station are different, the optimization task to be performed by different base stations may be different. By utilizing the data originating from completed optimization by other base stations, data samples of a base station can be enlarged for optimization. For example, the base station shall take the first network slice resource configuration information as a reference, and make further adjustments based on the network slice resource configuration information local to the base station, so that the SLA indicator corresponding to the network slice within the base station meets the indicator threshold. Therefore, the second network slice resource configuration information local to the base station is obtained. The second network slice resource configuration information corresponds to the first network slice resource configuration information. The first network slice resource configuration information is adjusted according to the local second network slice resource configuration information, so that the optimization of the network slice local to the base station conforms to the environment and conditions of the current base station, and the SLA indicator of the local base station can meet the indicator threshold, such that the optimization task can be completed, thus improving the optimization effect and efficiency of the network slice, and the stability of the network.

It should be noted that the local second network slice resource configuration information of the base station corresponds to the first network slice resource configuration information from the second base station. The second network slice resource configuration information may include at least one of, a resource reservation policy, a service quality configuration policy, or a 5G service quality indicator, and may also be a parameter set related to SLA indicators defined in the 3rd Generation Partnership Project (3GPP) specification. The parameters of the second network slice resource configuration information are identical to those of the first network slice resource configuration information. Since the parameters related to the first network slice resource configuration information have already been discussed in the above embodiments, and the parameters of the second network slice resource configuration information will not be illustrated here to avoid redundancy.

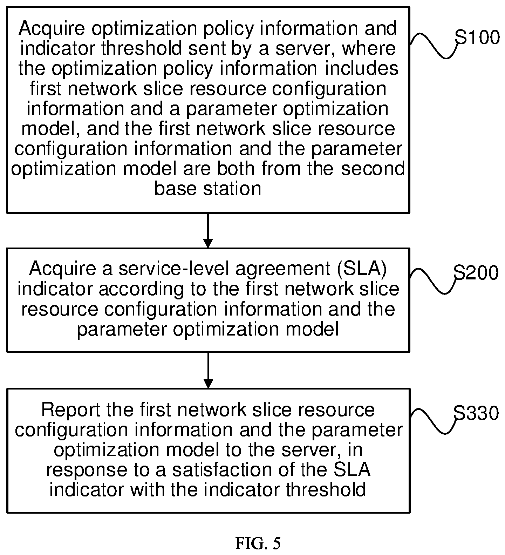

Referring to FIG. 5, the additional operation after S200 in the embodiment shown in conjunction with FIG. 2 further includes without limitations the following operations.

At S330, the first network slice resource configuration information and the parameter optimization model are reported to the server, in response to a satisfaction of the SLA indicator with the indicator threshold.

It can be understood that, the SLA indicator can be obtained according to the first network slice resource configuration information and parameter optimization model. The SLA indicator can be compared with the indicator threshold to determine whether the optimization of the network slice according to the current first network slice resource configuration information and parameter optimization model can meet the goal of the optimization task issued by the server. When the SLA indicator meets the indicator threshold, it can be considered that after the base station locally optimizes the network slice by means of the current first network slice resource configuration information and optimization model, the optimized network slice can achieve the goal of the optimization task, that is, the optimization task is completed, and the adjustment of the first network slice resource configuration information and the optimization of the network slice end. The corresponding first network slice resource configuration information and parameter optimization model that currently satisfy the indicator threshold are reported to the server, such that the optimization result is fed back to the server. Hence, the interaction of a large amount of data between the base station and the server can be effectively reduced, the communication overhead can be reduced, and the optimization efficiency can be improved.

It should be noted that when the SLA indicator fails to meet the indicator threshold, the first base station may further report the unsuccessful optimization to the server as the optimization result, so that the server can know the progress of the optimization of the first base station in time and the optimization efficiency can be improved.

It should be noted that when the SLA indicator obtained by the first base station according to the adjusted first network slice resource configuration information and parameter optimization model meets the indicator threshold, the first base station can broadcast the first network slice resource configuration information and parameter optimization model to other base stations through the server, so that other base stations can supplement the adjusted first network slice resource configuration information and parameter optimization model from the first base station to their own data samples. As such, the other base stations can complete the optimization task of network slices with assistance, thus improving the optimization efficiency and effect of base stations.

It should be noted that the first base station can monitor its own SLA indicator. When the SLA indicator does not meet the indicator threshold, even if the SLA indicator of the first base station once met the indicator threshold, the first base station can report the information of initiation of a self-optimization to the server, and adjust the current first network slice resource configuration information, so that the SLA indicator meeting the indicator threshold can be obtained according to the adjusted first network slice resource configuration information and parameter optimization model, thus realizing the real-time self-optimization of the first base station, reducing the workload of manual optimization and improving the optimization efficiency.

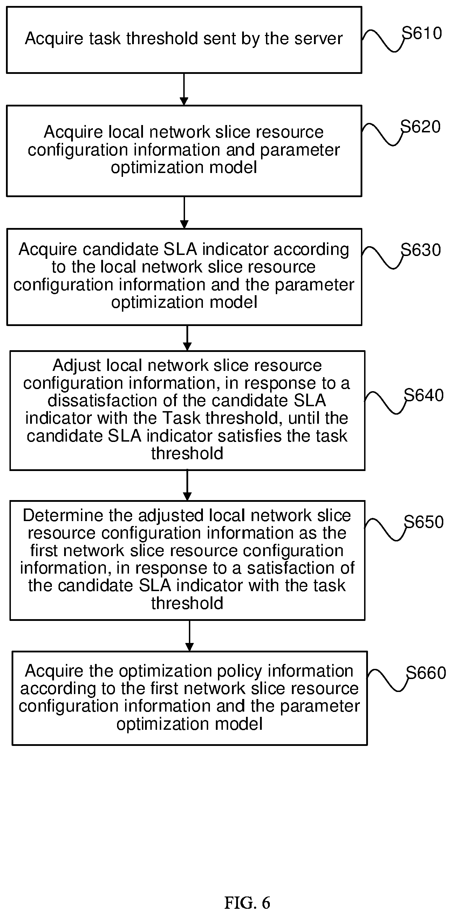

As shown in FIG. 6, the optimization policy information is obtained through the following operations.

At S610, a task threshold sent by the server is acquired.

At S620, local network slice resource configuration information and the parameter optimization model are acquired.

At S630, candidate SLA indicators are acquired according to the local network slice resource configuration information and the parameter optimization model.

At S640, the local network slice resource configuration information is adjusted, in response to a dissatisfaction of the candidate SLA indicator with the task threshold, until the candidate SLA indicator satisfies the task threshold.

At S650, the adjusted local network slice resource configuration information is determined as the first network slice resource configuration information, in response to a satisfaction of the candidate SLA indicator with the task threshold.

At S660, the optimization policy information is acquired according to the first network slice resource configuration information and the parameter optimization model.

It can be understood that the optimization policy information can be obtained and processed by the base station. The base station obtains the task threshold sent by the server, as well as the local network slice resource configuration information and parameter optimization model. The task threshold represents the goal of the optimization task to be achieved by the SLA indicator corresponding to the network slice. The base station utilizes the local network slice resource configuration information and the parameter optimization model to obtain the candidate SLA indicator representing the corresponding performance of the network slice optimized according to the local network slice resource configuration information. When the candidate SLA indicator fails to meet the task threshold, that means the network slice optimized by means of the current local network slice resource configuration information fails to meet the goal of the optimization task. And thus, it is necessary to adjust the candidate SLA indicator, such that the candidate SLA indicator can meet the task threshold. The candidate SLA indicator is obtained from the local network slice resource configuration information and the parameter optimization model. Therefore, the local network slice resource configuration information is adjusted, and the network slice is optimized by means of the adjusted local network slice resource configuration information, so that the candidate SLA indicator after the optimization meets the task threshold. Therefore, the self-optimization task can be completed by means of the data local to the base station.

It can be understood that, when the candidate SLA indicator meets the task threshold, that is, the network slice obtained by means of the adjusted local network slice resource configuration information and the parameter optimization model can complete the goal of the optimization task, it can be considered that the optimization task is completed. Then the adjusted local network slice resource configuration information is determined as the first network slice resource configuration information, and the optimization policy information is obtained according to the first network slice resource configuration information and the parameter optimization model. As such, the optimization result of the local base station, namely the optimization policy information, can be shared with other base stations through the server, other base stations can complete the optimization task with assistance from the local base station, thus reducing the communication overhead between the server and the base stations, enlarging the data samples of other base stations, and improving the optimization effect and efficiency.

It shall be noted that, the parameters of the local network slice resource configuration information are identical to those of the first network slice resource configuration information. Since the parameters related to the first network slice resource configuration information have already been discussed in the above embodiments, and the parameters of the local network slice resource configuration information will not be illustrated here to avoid redundancy.

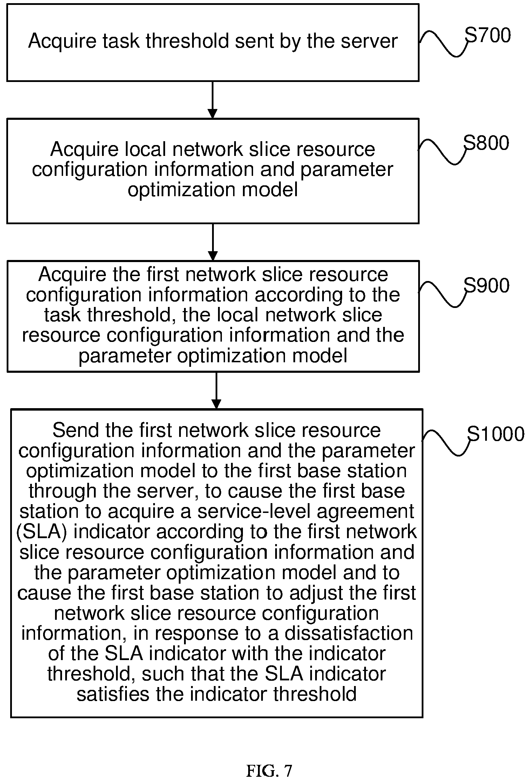

Referring to FIG. 7, which depicts a flowchart showing a method for network slice self-optimization according to an embodiment of the present disclosure. The method can be applied to a second base station, such as the second base station shown in FIG. 1. The method includes without limitations, the following operations.

At S700, a task threshold sent by the server is acquired.

At S800, local network slice resource configuration information and a parameter optimization model are acquired.

At S900, first network slice resource configuration information is acquired according to the task threshold, the local network slice resource configuration information and the parameter optimization model.

At S 1000, the first network slice resource configuration information and the parameter optimization model are sent to the first base station through the server, to cause the first base station to acquire a service-level agreement (SLA) indicator according to the first network slice resource configuration information and the parameter optimization model, and to cause the first base station to adjust the first network slice resource configuration information, in response to a dissatisfaction of the SLA indicator with the indicator threshold, such that the SLA indicator satisfies the indicator threshold.

It can be understood that the second base station can determine the goal of the optimization task of the network slice by the acquired task threshold from the server. The local network slice resource configuration information and parameter optimization model of the base station are acquired, and the optimization of the network slice can be performed without relying on the optimized data of other base stations. The base station can perform optimization and prediction according to the task threshold, the local network slice resource configuration information and the parameter optimization model, and obtain the first network slice resource configuration information after the optimization. The first network slice resource configuration information and the parameter optimization model after the optimization are sent to the first base station through the server. Hence, the first base station can obtain the SLA indicator corresponding to the currently optimized network slice according to the first network slice resource configuration information and parameter optimization model originating from a completed optimization by the second base station. The first base station is enabled to adjust the first network slice resource configuration information under the condition that the SLA indicator does not meet the indicator threshold obtained by the first base station from the server, that is, the current optimization process of the first base station still does not reach the goal of the optimization task issued by the server, such that the SLA indicator meets the indicator threshold and the optimization task of the first base station completes. The first network slice resource configuration information and the parameter optimization model of the second base station can expand the data samples of the first base station for optimizing the network slice under the coordination of the server, which is helpful for the first base station to complete the self-optimization task of the RAN network slice, thus reducing the workload of manual optimization, and improving the optimization effect and efficiency.

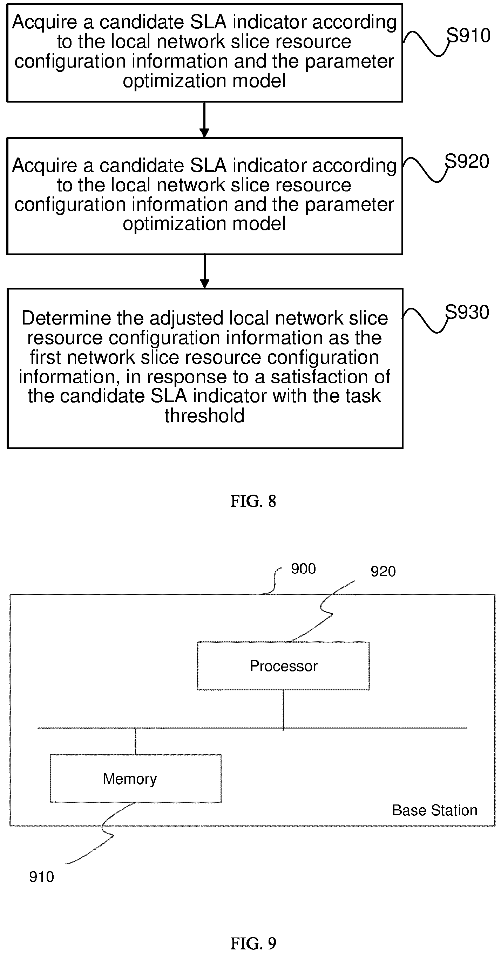

Referring to FIG. 8, S900 in the embodiment shown in conjunction with FIG. 8 further includes, but is not limited to, the following operations.

At S910, a candidate SLA indicator is acquired according to the local network slice resource configuration information and the parameter optimization model.

At S920, the local network slice resource configuration information is adjusted, in response to a dissatisfaction of the candidate SLA indicator with the task threshold, until the candidate SLA indicator satisfies the task threshold.

At S930, the adjusted local network slice resource configuration information is determined as the first network slice resource configuration information, in response to a satisfaction of the candidate SLA indicator with the task threshold.

It can be understood that the local network slice resource configuration information and the parameter optimization model are utilized to optimize the network slice. In other words, the local network slice resource configuration information can be utilized as an input parameter, and is input into the parameter optimization model for optimization and prediction, so as to obtain the candidate SLA indicator corresponding to the optimized network slice. When the candidate SLA indicator does not meet the task threshold, it can be considered that the network slice currently optimized by the second base station does not meet the goal of the optimization task of the server. In such a case, it is necessary to adjust the local network slice resource configuration information. The local network slice resource configuration information is the configuration data or policy data associated with the network slice. By adjusting the local network slice resource configuration information, the network slice can be adjusted and optimized, the performance of the network slice can be improved, and the corresponding candidate SLA indicator can be improved. The adjusted candidate SLA indicator is obtained according to the adjusted local network slice resource configuration information and parameter optimization model. Suppose the adjusted candidate SLA indicator still fails to meet the task threshold. In that case, it is necessary to further adjust the local network slice resource configuration information until the candidate SLA indicator can meet the task threshold, that is, the network slice optimized according to the adjusted local network slice resource configuration information and parameter optimization model meets the goal of optimization task of the server and the optimization task completes. When the candidate SLA indicator meets the task threshold, the local network slice resource configuration information corresponding to the candidate SLA indicator, i.e., the adjusted local network slice resource configuration information, is determined as the first network slice resource configuration information, so as to assist the first base station in self-optimization of the network slice through the server. As a result, the second base station optimizes the network slice by means of the local data of the base station, i.e., the local network slice resource configuration information and the parameter optimization model, through the task threshold issued by the server, until the optimized network slice reaches the goal of the optimization task of the server. The local network slice resource configuration information corresponding to the network slice whose goal of the optimization task is completed, is determined as the first network slice resource configuration information. As such, data samples are provided for the network slice optimization of the first base station through the first network slice resource configuration information, thus assisting the first base station to carry out network slice self-optimization, realizing lateral federated learning, achieving the self-optimization of network slices, reducing the workload of manual optimization and improving the efficiency of network optimization.

It should be noted that when the candidate SLA indicator does not satisfy the task threshold, the second base station will keep adjusting the local network slice resource configuration information until the candidate SLA indicator satisfies the task threshold. In order to avoid long optimization processing time and improve optimization efficiency, the iteration times of the candidate SLA can be limited by setting the upper limit of adjustment times, that is, the adjustment times of the local network slice resource configuration information are limited. When the adjustment times of the local network slice resource configuration information reach the upper limit of adjustment times, the last adjusted local network slice resource configuration information is retained and is taken as the optimization result, then the optimization of the network slice ends.

It should be noted that the local network slice resource configuration information may include at least one of, a resource reservation policy, a service quality configuration policy, or a 5G service quality indicator, and may also be a parameter set related to SLA indicators defined in the 3rd Generation Partnership Project (3GPP) specification, this embodiment is not limited thereto. For example, the local network slice resource configuration information can be the maximum resource reservation ratio parameter in the resource reservation policy, and the network slice is optimized by adjusting the maximum resource reservation ratio parameter, so that the adjusted SLA indicator meets the indicator threshold. For another example, the local network slice resource configuration information can be a quality of service (QoS) configuration policy. In this case, the network slice can be optimized by adjusting the network traffic priority in the QoS configuration policy, so that the adjusted SLA indicator meets the indicator threshold.

It should be noted that under the condition that the candidate SLA indicator does not meet the task threshold, the first base station can further adjust the local network slice resource configuration information according to the gap relationship between the candidate SLA indicator that corresponds to a preceding completed adjustment and the task threshold. For example, the local network slice resource configuration information can be a maximum resource reservation ratio parameter. After the maximum resource reservation ratio parameter is decreased, the gap between the adjusted candidate SLA and the task threshold is enlarged. In such a case, the maximum resource reservation ratio parameter is successively adjusted in the reverse direction, that is, the parameter is kept increasing. For another example, after the maximum resource reservation ratio parameter is decreased, the gap between the adjusted candidate SLA indicator and the task threshold is narrowed. In such a case, the direction of the adjustment of the local network slice resource configuration information is maintained (keeps decreasing), but the step for the adjustment is shortened, thereby improving the efficiency of the network slice optimization of the second base station.

Referring to FIG. 9, which depicts a base station 900 according to an embodiment of the present disclosure. The base station 900 includes without limitations,
a memory 910 configured to store a program;
a processor 920 configured to execute the program stored in the memory 910, and when the processor 920 executes the computer program stored in the memory 910, the processor 920 is caused to perform any one of the methods for network slice self-optimization described above.

The processor 920 and the memory 910 may be connected by a bus or other means.

The memory 910, as a non-transient computer-readable storage medium, can be configured to store non-transitory software programs and non-transitory computer-executable programs, such as the method described in any one of the embodiments of the present disclosure. The processor 920 executes the non-transitory software programs and instructions stored in the memory 910, such that the method described in any one of the embodiments of the present disclosure is carried out.

The memory 910 may include a program storage section and a data storage section, in which the program storage section may store an operating system and application programs for performing at least one operation, and the data storage section may store a program of the method described in any one of the embodiments of the present disclosure. In addition, the memory 910 may include a high-speed random access memory and a non-transitory memory, such as at least one disk memory device, a flash memory device, or other transitory solid-state memory devices. In some implementations, the memory 910 may include memories remotely located relative to the processor 920, and these remote memories may be connected to the processor 920 through a network. Examples of the above networks include, but are not limited to, the Internet, intranet, local area network, mobile communication network, and combinations thereof.

Non-transitory software programs and instructions for the method in the above embodiments are stored in memory 910 which, when executed by processor 920, causes the processor to carry out the method in any one of the embodiments described above.

An embodiment of the present disclosure further provides a computer-readable storage medium storing a computer-executable instruction which, when executed by a processor, causes the processor to carry out any one of the methods as described above.

In an embodiment, the computer-readable storage medium stores computer-executable instructions, which when executed by one or more control processors, for example, by a processor in the above-described network apparatus, causes the processor(s) to carry out the method described in any one of the embodiments of the present disclosure.

The method according to an embodiment of the present disclosure includes, acquiring optimization policy information and indicator threshold sent by a server, where the optimization policy information includes first network slice resource configuration information and a parameter optimization model, and the first network slice resource configuration information and the parameter optimization model are both from the second base station; acquiring a service-level agreement (SLA) indicator according to the first network slice resource configuration information and the parameter optimization model; and adjusting the first network slice resource configuration information, in response to dissatisfaction of the SLA indicator with the indicator threshold, such that the SLA indicator satisfies the indicator threshold. According to the scheme provided in an embodiment of the present disclosure, an indicator threshold, first network slice resource configuration information, and a parameter optimization model are acquired through a server. As such, a service-level agreement (SLA) indicator can be obtained by means of the first network slice resource configuration information and the parameter optimization model from the second base station. The SLA indicator may represent the performance of the current network slice, or may represent the optimization effect of the current network slice. Hence, the optimization policy information of other base stations can be obtained through the server as data samples to optimize the local base station, thereby expanding the data samples of the local base station, and improving optimization efficiency and effectiveness. As a task criterion issued by the server, the indicator threshold is intended to determine the optimization effect of the current base station. When the SLA indicator does not meet the indicator threshold, it can be considered that the optimization effect of the network slice of the current base station has not reached the criteria. The SLA indicator can meet the indicator threshold by suitably adjusting the first network slice resource configuration information, such that, the optimization effect of the network slice of the current base station meets the requirements and the optimization task is completed. Therefore, through the indicator threshold issued by the server and the SLA indicator representing the performance of the current network slice, the configuration parameters of the first base station are adjusted for optimization, so as to realize the self-optimization of the RAN network slice, thus reducing the workload of manual optimization and improving the efficiency of network optimization.

The above-described embodiments are only schematic, in which the units illustrated as separate components may or may not be physically separated, that is, they may be located in one place or distributed over several network units. Some or all of the modules can be selected according to the practical needs to achieve the purpose of this embodiment.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor, or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules, or other data. The computer storage medium includes but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to a person having ordinary skills in the art that communication media usually contains computer-readable instructions, data structures, program modules, or other data in modulated data signals such as carrier waves or other transmission mechanisms, and can include any information delivery media.

## Claims

1. A method for network slice self-optimization, applied to a first base station connected with a server in turn connected with a second base station, **characterized in that** the method comprises,
receiving optimization policy information and indicator threshold sent by the server, wherein the optimization policy information comprises first network slice resource configuration information and a parameter optimization model, and the first network slice resource configuration information and the parameter optimization model are both received from the second base station through the server (S100);
acquiring a service-level agreement, SLA, indicator according to the first network slice resource configuration information and the parameter optimization model (S200); and
adjusting the first network slice resource configuration information, in response to a dissatisfaction of the SLA indicator with the indicator threshold, such that the SLA indicator satisfies the indicator threshold (S300).

2. The method as claimed in claim 1, wherein acquiring the SLA indicator according to the first network slice resource configuration information and the parameter optimization model (S200) comprises,
inputting the first network slice resource configuration information into the parameter optimization model for optimization and prediction, to acquire the SLA indicator (S210).

3. The method as claimed in claim 1, wherein adjusting the first network slice resource configuration information comprises,
acquiring second network slice resource configuration information which is local (S310); and
adjusting the first network slice resource configuration information according to the second network slice resource configuration information (S320).

4. The method as claimed in claim 1, wherein after acquiring the SLA indicator according to the first network slice resource configuration information and the parameter optimization model (S200), the method further comprises,
reporting the first network slice resource configuration information and the parameter optimization model to the server, in response to a satisfaction of the SLA indicator with the indicator threshold (S330).

5. The method as claimed in claim 1, wherein the optimization policy information is acquired by,
acquiring a task threshold sent by the server (S610);
acquiring local network slice resource configuration information and the parameter optimization model (S620);
acquiring a candidate SLA indicator according to the local network slice resource configuration information and the parameter optimization model (S630);
adjusting the local network slice resource configuration information, in response to a dissatisfaction with the candidate SLA indicator with the task threshold, such that the candidate SLA indicator satisfies the task threshold (S640);
determining the adjusted local network slice resource configuration information as the first network slice resource configuration information, in response to a satisfaction of the candidate SLA indicator with the task threshold (S650); and
acquiring the optimization policy information according to the first network slice resource configuration information and the parameter optimization model (S660).

6. The method as claimed in any one of claims 1 to 5, wherein the first network slice resource configuration information comprises at least one of, a resource reservation policy, a quality-of-service configuration policy, or a 5G quality of service indicator.

7. A method for network slice self-optimization, applied to a second base station connected with a server in turn connected with a first base station, **characterized in that** the method comprises,
acquiring a task threshold sent by the server (S700);
acquiring local network slice resource configuration information and a parameter optimization model (S800);
acquiring first network slice resource configuration information according to the task threshold, the local network slice resource configuration information and the parameter optimization model (S900);
sending the first network slice resource configuration information and the parameter optimization model to the first base station through the server, to cause the first base station to acquire a service-level agreement, SLA, indicator according to the first network slice resource configuration information and the parameter optimization model, and to cause the first base station to adjust the first network slice resource configuration information, in response to a dissatisfaction of the SLA indicator with an indicator threshold sent by the server to the first base station, such that the SLA indicator satisfies the indicator threshold (S1000).

8. The method as claimed in claim 7, wherein acquiring the first network slice resource configuration information according to the task threshold, the local network slice resource configuration information and the parameter optimization model (S900) comprises,
acquiring a candidate SLA indicator according to the local network slice resource configuration information and the parameter optimization model (S910);
adjusting the local network slice resource configuration information, in response to a dissatisfaction with the candidate SLA indicator with the task threshold, such that the candidate SLA indicator satisfies the task threshold (S920); and
determining the adjusted local network slice resource configuration information as the first network slice resource configuration information, in response to a satisfaction of the candidate SLA indicator with the task threshold (S930).

9. The method as claimed in claim 7 or claim 8, wherein the local network slice resource configuration information comprises at least one of, a resource reservation policy, a quality-of-service configuration policy, or a 5G quality-of-service indicator.

10. A base station (900), comprising a memory (910), a processor (920), and a computer program stored in the memory (910) and executable by the processor (920) which, when executed by the processor (920) causes the processor (920) to carry out the method as claimed in any one of claim 1 to claim 9.

11. A computer-readable storage medium storing a computer program which, when executed by a processor, causes the processor to carry out the method as claimed in any one of claim 1 to claim 9.

12. A computer program comprising instructions which, when the program is executed by a computer, cause the computer to carry out the method as claimed in any one of claim 1 to claim 9.

## Patentansprüche

1. Verfahren zur Selbstoptimierung von Netzwerk-Slices, das auf eine erste Basisstation angewendet wird, die mit einem Server verbunden ist, der wiederum mit einer zweiten Basisstation verbunden ist, **dadurch gekennzeichnet, dass** das Verfahren umfasst:
Empfangen von Optimierungsrichtlinieninformationen und eines Indikatorschwellenwerts, die von dem Server gesendet werden, wobei die Optimierungsrichtlinieninformationen erste Netzwerk-Slice-Ressourcenkonfigurationsinformationen und ein Parameteroptimierungsmodell umfassen, und die ersten Netzwerk-Slice-Ressourcenkonfigurationsinformationen und das Parameteroptimierungsmodell beide von der zweiten Basisstation über den Server empfangen werden (S100);
Erfassen eines Dienstgütevereinbarungs-Indikators (SLA-Indikators) gemäß den ersten Netzwerk-Slice-Ressourcenkonfigurationsinformationen und dem Parameteroptimierungsmodell (S200); und
Anpassen der ersten Netzwerk-Slice-Ressourcenkonfigurationsinformationen als Reaktion auf eine Nichteinhaltung des Indikatorschwellenwerts durch den SLA-Indikator, so dass der SLA-Indikator den Indikatorschwellenwert erfüllt (S300).

2. Verfahren nach Anspruch 1, wobei das Erfassen des SLA-Indikators gemäß den ersten Netzwerk-Slice-Ressourcenkonfigurationsinformationen und dem Parameteroptimierungsmodell (S200) umfasst:
Eingeben der ersten Netzwerk-Slice-Ressourcenkonfigurationsinformationen in das Parameteroptimierungsmodell zur Optimierung und Vorhersage, um den SLA-Indikator zu erfassen (S210).

3. Verfahren nach Anspruch 1, wobei das Anpassen der ersten Netzwerk-Slice-Ressourcenkonfigurationsinformationen umfasst:
Erfassen von zweiten Netzwerk-Slice-Ressourcenkonfigurationsinformationen, die lokal sind (S310); und
Anpassen der ersten Netzwerk-Slice-Ressourcenkonfigurationsinformationen gemäß den zweiten Netzwerk-Slice-Ressourcenkonfigurationsinformationen (S320).

4. Verfahren nach Anspruch 1, wobei das Verfahren nach dem Erfassen des SLA-Indikators gemäß den ersten Netzwerk-Slice-Ressourcenkonfigurationsinformationen und dem Parameteroptimierungsmodell (S200) ferner umfasst:
Melden der ersten Netzwerk-Slice-Ressourcenkonfigurationsinformationen und des Parameteroptimierungsmodells an den Server als Reaktion auf eine Erfüllung des Indikatorschwellenwerts durch den SLA-Indikator (S330).

5. Verfahren nach Anspruch 1, wobei die Optimierungsrichtlinieninformationen erfasst werden durch:
Erfassen eines Aufgabenschwellenwerts, der von dem Server gesendet wird (S610);
Erfassen von lokalen Netzwerk-Slice-Ressourcenkonfigurationsinformationen und des Parameteroptimierungsmodells (S620);
Erfassen eines Kandidaten-SLA-Indikators gemäß den lokalen Netzwerk-Slice-Ressourcenkonfigurationsinformationen und dem Parameteroptimierungsmodell (S630);
Anpassen der lokalen Netzwerk-Slice-Ressourcenkonfigurationsinformationen als Reaktion auf eine Nichteinhaltung des Aufgabenschwellenwerts durch den Kandidaten-SLA-Indikator, so dass der Kandidaten-SLA-Indikator den Aufgabenschwellenwert erfüllt (S640);
Bestimmen der angepassten lokalen Netzwerk-Slice-Ressourcenkonfigurationsinformationen als die ersten Netzwerk-Slice-Ressourcenkonfigurationsinformationen als Reaktion auf eine Erfüllung des Aufgabenschwellenwerts durch den Kandidaten-SLA-Indikator (S650); und
Erfassen der Optimierungsrichtlinieninformationen gemäß den ersten Netzwerk-Slice-Ressourcenkonfigurationsinformationen und dem Parameteroptimierungsmodell (S660).

6. Verfahren nach einem der Ansprüche 1 bis 5, wobei die ersten Netzwerk-Slice-Ressourcenkonfigurationsinformationen mindestens eines von einer Ressourcenreservierungsrichtlinie, einer Dienstgüte-Konfigurationsrichtlinie oder einem 5G-Dienstgüteindikator umfassen.

7. Verfahren zur Selbstoptimierung von Netzwerk-Slices, das auf eine zweite Basisstation angewendet wird, die mit einem Server verbunden ist, der wiederum mit einer ersten Basisstation verbunden ist, **dadurch gekennzeichnet, dass** das Verfahren umfasst:
Erfassen eines Aufgabenschwellenwerts, der von dem Server gesendet wird (S700);
Erfassen von lokalen Netzwerk-Slice-Ressourcenkonfigurationsinformationen und eines Parameteroptimierungsmodells (S800);
Erfassen von ersten Netzwerk-Slice-Ressourcenkonfigurationsinformationen gemäß dem Aufgabenschwellenwert, den lokalen Netzwerk-Slice-Ressourcenkonfigurationsinformationen und dem Parameteroptimierungsmodell (S900);
Senden der ersten Netzwerk-Slice-Ressourcenkonfigurationsinformationen und des Parameteroptimierungsmodells an die erste Basisstation über den Server, um zu veranlassen, dass die erste Basisstation einen Dienstgütevereinbarungs-Indikator (SLA-Indikator) gemäß den ersten Netzwerk-Slice-Ressourcenkonfigurationsinformationen und dem Parameteroptimierungsmodell erfasst, und um zu veranlassen, dass die erste Basisstation die ersten Netzwerk-Slice-Ressourcenkonfigurationsinformationen als Reaktion auf eine Nichteinhaltung eines von dem Server an die erste Basisstation gesendeten Indikatorschwellenwerts durch den SLA-Indikator anpasst, so dass der SLA-Indikator den Indikatorschwellenwert erfüllt (S1000).

8. Verfahren nach Anspruch 7, wobei das Erfassen der ersten Netzwerk-Slice-Ressourcenkonfigurationsinformationen gemäß dem Aufgabenschwellenwert, den lokalen Netzwerk-Slice-Ressourcenkonfigurationsinformationen und dem Parameteroptimierungsmodell (S900) umfasst:
Erfassen eines Kandidaten-SLA-Indikators gemäß den lokalen Netzwerk-Slice-Ressourcenkonfigurationsinformationen und dem Parameteroptimierungsmodell (S910);
Anpassen der lokalen Netzwerk-Slice-Ressourcenkonfigurationsinformationen als Reaktion auf eine Nichteinhaltung des Aufgabenschwellenwerts durch den Kandidaten-SLA-Indikator, so dass der Kandidaten-SLA-Indikator den Aufgabenschwellenwert erfüllt (S920); und
Bestimmen der angepassten lokalen Netzwerk-Slice-Ressourcenkonfigurationsinformationen als die ersten Netzwerk-Slice-Ressourcenkonfigurationsinformationen als Reaktion auf eine Erfüllung des Aufgabenschwellenwerts durch den Kandidaten-SLA-Indikator (S930).

9. Verfahren nach Anspruch 7 oder Anspruch 8, wobei die lokalen Netzwerk-Slice-Ressourcenkonfigurationsinformationen mindestens eines von einer Ressourcenreservierungsrichtlinie, einer Dienstgüte-Konfigurationsrichtlinie oder einem 5G-Dienstgüteindikator umfassen.

10. Basisstation (900), umfassend einen Speicher (910), einen Prozessor (920) und ein Computerprogramm, das in dem Speicher (910) gespeichert ist und von dem Prozessor (920) ausgeführt werden kann, das, wenn es von dem Prozessor (920) ausgeführt wird, den Prozessor (920) dazu veranlasst, das Verfahren nach einem von Anspruch 1 bis Anspruch 9 durchzuführen.

11. Computerlesbares Speichermedium, das ein Computerprogramm speichert, das, wenn es durch einen Prozessor ausgeführt wird, den Prozessor dazu veranlasst, das Verfahren nach einem von Anspruch 1 bis Anspruch 9 durchzuführen.

12. Computerprogramm, das Anweisungen umfasst, die, wenn das Programm von einem Computer ausgeführt wird, den Computer dazu veranlassen, das Verfahren nach einem von Anspruch 1 bis Anspruch 9 durchzuführen.

## Revendications

1. Procédé d'auto-optimisation de tranche de réseau, appliqué à une première station de base connectée à un serveur lui-même connecté à une deuxième station de base, **caractérisé en ce que** le procédé comprend,
recevoir des informations de politique d'optimisation et un seuil d'indicateur envoyés par le serveur, dans lequel les informations de politique d'optimisation comprennent des informations de configuration de ressource de première tranche de réseau et un modèle d'optimisation de paramètre, et les informations de configuration de ressource de première tranche de réseau et le modèle d'optimisation de paramètre sont tous deux reçus de la deuxième station de base par l'intermédiaire du serveur (S100) ;
acquérir un accord de niveau de service (en Anglais « service-level agreement » pour SLA), indicateur selon les premières informations de configuration de ressource de tranche de réseau et le modèle d'optimisation de paramètre (S200) ; et
ajuster les informations de configuration de ressource de première tranche de réseau, en réponse à une insatisfaction de l'indicateur SLA avec le seuil d'indicateur, de sorte que l'indicateur SLA satisfasse le seuil d'indicateur (S300).

2. Procédé selon la revendication 1, dans lequel l'acquisition de l'indicateur SLA selon les informations de configuration de ressource de première tranche de réseau et le modèle d'optimisation de paramètre (S200) comprend,
entrer les informations de configuration de ressource de première tranche de réseau dans le modèle d'optimisation de paramètre pour l'optimisation et la prédiction, afin d'acquérir l'indicateur SLA (S210).

3. Procédé selon la revendication 1, dans lequel l'ajustement des premières informations de configuration de ressource de première tranche de réseau comprend,
acquérir des informations de configuration de ressource de deuxième tranche de réseau qui sont locales (S310) ; et
ajuster les informations de configuration de ressource de première tranche de réseau en fonction des informations de configuration de ressource de deuxième tranche de réseau (S320).

4. Procédé selon la revendication 1, dans lequel après l'acquisition de l'indicateur SLA selon les informations de configuration de ressource de première tranche de réseau et le modèle d'optimisation de paramètre (S200), le procédé comprend en outre,
rapporter les informations de configuration de ressource de première tranche de réseau et le modèle d'optimisation de paramètre au serveur, en réponse à une satisfaction de l'indicateur SLA avec le seuil d'indicateur (S330).

5. Procédé selon la revendication 1, dans lequel les informations de politique d'optimisation sont acquises par,
acquérir un seuil de tâche envoyé par le serveur (S610) ;
acquérir des informations de configuration de ressource de tranche de réseau local et le modèle d'optimisation de paramètre (S620) ;
acquérir un indicateur SLA candidat en fonction des informations de configuration de ressource de tranche de réseau local et du modèle d'optimisation de paramètre (S630) ;
ajuster les informations de configuration de ressource de tranche de réseau local, en réponse à une insatisfaction avec l'indicateur SLA candidat avec le seuil de tâche, de sorte que l'indicateur SLA candidat satisfasse le seuil de tâche (S640) déterminer les informations de configuration de ressource de tranche de réseau local ajustées en tant qu'informations de configuration de ressource de première tranche de réseau, en réponse à une satisfaction de l'indicateur SLA candidat avec le seuil de tâche (S650) ; et
acquérir les informations de politique d'optimisation selon les informations de configuration de ressource de première tranche de réseau et le modèle d'optimisation de paramètre (S660).

6. Procédé selon l'une quelconque des revendications 1 à 5, dans lequel les informations de configuration de ressource de première tranche de réseau comprennent au moins un entre une politique de réservation de ressources, une politique de configuration de qualité de service ou un indicateur de qualité de service 5G.

7. Procédé d'auto-optimisation de tranche de réseau, appliqué à une deuxième station de base connectée à un serveur lui-même connecté à une première station de base, **caractérisé en ce que** le procédé comprend,
acquérir un seuil de tâche envoyé par le serveur (S700) ;
acquérir des informations de configuration de ressource de tranche de réseau local et un modèle d'optimisation de paramètre (S800) ;
acquérir des informations de configuration de ressource de première tranche de réseau selon le seuil de tâche, les informations de configuration de ressource de tranche de réseau local et le modèle d'optimisation de paramètre (S900) ;
envoyer les informations de configuration de ressource de première tranche de réseau et le modèle d'optimisation de paramètre à la première station de base par l'intermédiaire du serveur, pour amener la première station de base à acquérir un accord de niveau de service, SLA, indicateur selon les informations de configuration de ressource de première tranche de réseau et le modèle d'optimisation de paramètre, et pour amener la première station de base à ajuster les informations de configuration de ressource de première tranche de réseau, en réponse à une insatisfaction de l'indicateur SLA avec un seuil d'indicateur envoyé par le serveur à la première station de base, de sorte que l'indicateur SLA satisfasse le seuil d'indicateur (S1000).

8. Procédé selon la revendication 7, dans lequel l'acquisition des informations de configuration de ressource de première tranche de réseau selon le seuil de tâche, les informations de configuration de ressource de tranche de réseau local et le modèle d'optimisation de paramètre (S900) comprend,
acquérir un indicateur SLA candidat en fonction des informations de configuration de ressource de tranche de réseau local et du modèle d'optimisation de paramètre (S910) ;
ajuster les informations de configuration de ressource de tranche de réseau local, en réponse à une insatisfaction avec l'indicateur SLA candidat avec le seuil de tâche, de sorte que l'indicateur SLA candidat satisfasse le seuil de tâche (S920) ; et
déterminer les informations de configuration de ressource de tranche de réseau local ajustées en tant que informations de configuration de ressource de première tranche de réseau, en réponse à une satisfaction de l'indicateur SLA candidat avec le seuil de tâche (S930).

9. Procédé selon la revendication 7 ou la revendication 8, dans lequel les informations de configuration de ressource de tranche de réseau local comprennent au moins un entre une politique de réservation de ressources, une politique de configuration de qualité de service ou un indicateur de qualité de service 5G.

10. Station de base (900), comprenant une mémoire (910), un processeur (920) et un programme informatique stocké dans la mémoire (910) et exécutable par le processeur (920) qui, lorsqu'il est exécuté par le processeur (920), amène le processeur (920) à mettre en œuvre le procédé selon l'une quelconque des revendications 1 à 9.

11. Support de stockage lisible par ordinateur stockant un programme informatique qui, lorsqu'il est exécuté par un processeur, amène le processeur à mettre en œuvre le procédé selon l'une quelconque des revendications 1 à 9.

12. Programme informatique comprenant des instructions qui, lorsque le programme est exécuté par un ordinateur, amènent l'ordinateur à mettre en œuvre le procédé selon l'une quelconque des revendications 1 à 9.
